# EUROPÄISCHE PATENTANMELDUNG

(11) **EP 1 238 792 A2**
(43) Veröffentlichungstag der Anmeldung: **11.09.2002**
(21) Anmeldenummer: 02000525.2
(22) Anmeldetag: 09.01.2002
(51) Int. Cl.: B30B 11/24, B27N 3/28

(54) **Verfahren und Vorrichtung zum kontinuierlichen Strang- und Strangrohrpressen von Kleinteilen**

(30) Priorität: 13.01.2001 DE 10101386; 11.10.2001 DE 10155265
(71) Anmelder: Schedlbauer, Karl, 86551 Aichach (DE)
(72) Erfinder: Schedlbauer, Karl, 86551 Aichach (DE)

(57) **Zusammenfassung**

Die Erfindung betrifft ein Verfahren und ein Vorrichtung zum kontinuierlichen Strang- und Strangrohrpressen von Kleinteilen wie beispielsweise Holzkleinteile mit und ohne Bindemittel, Papierkleinteilen oder Kleinteilen aus der Blähbetonproduktion oder Papier- Kunststoff- Metallrezyklaten (Tetra-Pak-Kleinteilen), die nicht oder kaum unter Pressdruck fließen. Erfindungsgemäß wird der Pressdruck durch eine sich drehende Kulisse erzeugt, die eine lineare oder parabel- oder bogenförmige, in Pressrichtung von cá. 20° bis 45° auf 1,5 bis 15° abnehmende Steigung besitzt und in einer Länge von bis zu 360° oder einer Umdrehung ausgebildet ist. Die Befüllung der Vorrichtung erfolgt nahezu im freien Fall durch einen Gemengestrahl. Für die Herstellung von Pellets setzt die Erfindung vor das Verdichtungselement eine viellöcherige Matrize die den Pelletdurchmesser bestimmt.

## Beschreibung

Die Erfindung betrifft ein Verfahren und eine Vorrichtung zum kontinuierlichen Strang- und Strangrohrpressen von Kleinteilen wie beispielsweise Holzkleinteile mit und ohne Bindemittel, Papierkleinteilen oder Kleinteilen aus der Blähbetonproduktion oder Papier- Kunststoff- Metallrezyklaten (Tetra-Pak-Kleinteilen), die nicht oder kaum unter Pressdruck fließen. Derartige Verfahren und Vorrichtungen sind aus den auf den Anmelder zugehenden, bereits veröffentlichten Anmeldungen PCT/EP/99/01982, PCT/EP/99/01987 und P 199 56 417.5 und den zugehörigen Prioritätsanmeldungen bekannt.

Bei dem vorgenannten Verfahren PCT/EP/99/01987 wird die Verwendung von schraubenförmig gewundenen Spindeln gelehrt, bei denen sich der Querschnitt des Förderweges in Förderrichtung vergrößert. Wie aus den Zeichnungen dieser Anmeldung ersichtlich ist, wird eine Spirale oder ein Spindelelement oder eine Schnecke mit mehreren Umdrehungen vorgeschlagen.
Mit diesem Verfahren ist die Steuerbarkeit der Verdichtung erreicht worden. Bei anderen Vorrichtungen mit Spiral- oder Schneckenelementen mit gleichem Querschnitt des Förderraumes in Förderrichtung trat stets der Effekt der sich selbst erhöhenden Verdichtung ein. Ein derartiger, sich in Betrieb befindlicher Pressentyp kann nur für die Herstellung von Briketts aus Holzkleinteilen verwendet werden. Die Kleinteile werden dabei quasi annähernd auf das höchstmögliche Maß verdichtet und mit großer Friktion zum Fließen gebracht. Der Hauptteil der Antriebsenergie wird in die Reibung der Kleinteile (Späne) zueinander verbraucht und nicht um die Kleinteile zu verdichten. Entsprechend groß ist die sich entwickelnde Reibungswärme und der Verschleiß der Vorrichtungen. Sie neigen zu explosionsartigen Verbrennungen und sind für das Bedienungspersonal höchst gefährlich. Die verwendete Schnecke unterliegt einem derart großem Abrieb, dass sie bereits nach wenigen Tagen aufgeschweißt werden muss.

Diese Nachteile sind bei PCT/EP/99/01987 nicht aufgetreten, trotzdem konnte die Austragsgeschwindigkeit noch nicht voll überzeugen. Die Ursache, dass der Vorschub des Stranges gegenüber der Drehzahl des Verdichtungselementes unbefriedigend war, wurde darin erkannt, dass sich trotz der besagten Querschnittsvergrößerung die Kleinteile bereits im Fördertrumm verdichteten und/oder zum Teil retour in den Füllschacht gelangten. Als weiterer Nachteil musste erkannt werden, dass, insbesondere bei der Herstellung von runden Strängen, die Verwendung eines Domes fast unabdingbar war, da sich der Strang sonst zu sehr um seine eigene Achse drehte. Die Verwender von runden Palettenklötzen, welche aus den Strängen gesägt werden, benötigen aufgrund des Nagelbildes der Palette zum Teil Palettenklötze ohne Loch, welches durch den Dom erzeugt wurde. Durch den Dorn erfolgte jedoch auch die Feinsteuerung der Verdichtung.
Das Verdichtungselement wurde in einer Länge von mehreren Umdrehungen ausgeführt um die Kleinteile aus einem ausreichend großem Einlaufschacht dem Verdichtungselement zuzuführen. Sollten mit der vorgenannten Vorrichtung Briketts zum Verbrennen erzeugt werden, wurde teilweise die Biegefestigkeit des Werkstoffes des Verdichtungselementes überschritten. Überraschenderweise verbog sich die Spirale jedoch nicht über die ganze Länge oder bereits am Anfang, sondern lediglich etwa in dem Bereich des strangseitigen Trummes in einer Länge von etwa ¼ bis ¾ Umdrehungen.

In einer weiteren Ausgestaltung beschäftigt sich die Erfindung mit der Herstellung von Pellets für aus, insbesondere pflanzlichen Kleinteilen für Heiz- oder Futterzwecke.
Als Pellets werden vorzugsweise runde, relativ kurze wurstähnliche Presslinge bezeichnet, die zu Brennzwecken oder als Tierfuttermittel Verwendung finden. Bei Pellets aus Holzkleinteilen zum Verbrennen haben sich am Markt Durchmesser von 6,5 und 8 mm und einer Länge von etwa 1 bis 2 cm durchgesetzt. Sie werden auf sogenannten Kollerpressen hergestellt. Bei diesen Vorrichtungen dreht sich ein als dickwandiges Lochblech ausgebildeter Außenläufer. In Gegenrichtung dreht sich ein Innenläufer, an dem, sich ebenfalls drehende, gegen den Außenläufer drückende Rollen befestigt sind. Diese drücken die Kleinteile unter Verdichtung durch die Löcher des Außenläufers. Diese Vorrichtungen haben sich zur Pelletherstellung von Futtermitteln, beispielsweise Fischfutter durchgesetzt, bedingen aber eine erheblichen Bauaufwand. Wenig geeignet scheinen sie für die Verwendung von Holzkleinteilen. Die Koller, bzw. Rollen drücken die Kleinteile über die Lochkanten in die Löcher, welche quasi den Pressraum bilden. Dabei entsteht eine hohe Reibung und ein entsprechender Verschleiß. Aus der Strangpresstechnik von Holzkleinteilen sind die Nachteile dieses "Um- eine- Kante- pressen" bekannt.

Sowohl bei Strangpressen mit Kolbenantrieb als auch bei kontinuierlichen Pressen wird teilweise Wasserdampf und/oder Heißwasser in den Strang oder die Kleinteile eingebracht. Dabei werden durch den erforderlichen Dampfkessel hohe Investitions- und Wartungskosten verursacht.

Der Erfindung liegen folgende Aufgaben zugrunde:
Die Verbesserung des Verhältnisses der Drehzahl des Verdichtungselementes zum Vortrieb des Stranges.
Das Vermeiden einer Vorverdichtung der Kleinteile zwischen den Gängen des Förderelementes.
Eine sichere Steuerbarkeit der Verdichtung ohne die Verwendung eines Domes.
Das Zuführen des Gemenges mit hoher Geschwindigkeit in einem verhältnismäßig dünnen Strahl.
Das Verfahren von DE 101 01 386 derart weiter zu entwickeln, dass unter Beibehalt seiner Vorzüge Pellets der genannten kleinen Durchmesser insbesondere aus Holzkleinteilen und noch kleinere Pellets aus Futtermischungen kostengünstig hergestellt werden können.

Die Aufgaben der Erfindung werden mit den Merkmalen der Ansprüche gelöst.

Die Erfindung geht von den nachstehenden Erkenntnissen aus:
Die Verdichtung erfolgt im wesentlichen im vordersten Bereich von ¼ bis ¾ Umdrehungen des Verdichtungselementes.

Wird das Verdichtungselement lediglich in einer Länge von bis zu etwa einer Umdrehung ausgeführt, also quasi einer Kulisse, ist es derart stabil, dass jeder erforderliche Pressdruck erzielt werden kann.

Die Steigung kann am Beginn der Kulisse bis etwa 45° betragen, wenn sie sich im Bereich in dem die Kulisse in den Pressraum eintaucht verringert.

In Einlaufschächten rutscht das Gemenge relativ langsam hinunter, weshalb eine große Länge erforderlich ist, welche ein Verdichtungselement mit mehr als einem Gang bedingt.

Gelangen die Kleinteile im freien Fall, mit hoher Geschwindigkeit in den Einzugsbereich der Kulisse, genügt ein dünner Gemengestrahl um das Verdichtungselement ausreichend zu befüllen.

Bei einem Füll- und Pressraum gemäß PCT/EP/99/01982 verringert sich die Verdichtung, wenn das Förderelement weniger weit in den Pressraum eintaucht und erhöht sich, wenn das Förderelement tiefer eintaucht.

Die Erfindung bildet deshalb das Verdichtungselement als eine runde Kulisse mit max. 360° aus. Sie sieht aber für eine bessere Gemengezufuhr eine Hinterschneidung an der strangabgewandten Seite vor. Die Eintauchtiefe der Kulisse in den Pressraum ist abhängig von den verwendeten Kleinteilen und beträgt etwa 60° bis cá. 300° einer Kulissenumdrehung. Das Verdichtungselement kann mit einer Bohrung zur Durchführung eines Domes versehen werden. Der Füll und Pressraum wird von der Erfindung gemäß PCT/EP/99/01982 ausgebildet. Sie sieht als Weiterentwicklung dieser Anmeldung jedoch eine in Pressrichtung hinterhalb der Eintrittsöffnung für das Gemenge liegende, nach unten weisende Öffnung vor, aus der zurückwanderndes Gemenge ins Freie gelangen kann, ohne sich zur Lagerung des Verdichtungselementes hin zu verdichten und Verstopfungen herbeiführen zu können.
Die Erfindung verwendet keinen Einlaufschacht sondern führt das Gemenge durch eine Rüttelrinne dem Füllraum zu. Die Vorderseite des Rüttelrinnenbodens wird Vorteilhafterweise in etwa in Form der Wurfparabel für das Gemenge ausgebildet. In der Lotrechten zur Pressrichtung wird der parabelförmige Teil des Rüttelrinnenbodens in einer, von der Gemengeart abhängigen Länge gefertigt. Diese kann bei Holzkleinteilen etwa 80 bis 300 mm und z.b. bei Blähbetonkleinteilen durchaus über 500 mm betragen. Je mehr Gemenge zugeführt werden muss, desto länger wird das parabelförmige Rinnentrumm ausgeführt. Eine obere Grenze bildet lediglich die in der Atmosphäre erreichbare Endgeschwindigkeit im freien Fall, wobei die Erfindung selbstredend keine bautechnisch sinnvolle Länge überschreitet.
Als besonders einfache und preiswerte Lösung haben sich als Antrieb für die Rüttelrinne elektromagnetische Kleinförderer bewährt. Beispielsweise genügt als Rinnenantrieb für eine Strangpresse für Palettenklötze oder Briketts aus Holzkleinteilen von cá. 70 mm bis etwa 100 mm Durchmesser ein Kleinförderer der Fa. AVITEC vom Typ Kr 6 oder Kr 12. Um einen möglichst hohen Austrag der Rüttelrinne zu erzielen wird sie um 3° bis etwa 30° zur Eintrittsöffnung des Füll- und Pressraumes geneigt.
Bei einer Rundpresse von 80 mm und einer Ausstoßleistung von 7 m/min bei Palettenklötzen von cá. 0,6 kg/dm³ Dichte, oder Briketts von 1,2 kg/dm³ Dichte und einer Ausstoßleistung von cá. 3,5 m/min erreicht eine erfindungsgemäß geformte Rüttelrinne eine derartige Eintragsgeschwindigkeit des Gemenges in den Füllraum, dass ein Strahlquerschnitt des Gemenges am Ende der Rüttelrinne von etwa 60 x 20 mm genügt. Daraus ergibt sich, dass für die Einlauföffnung ein Querschnitt von etwa 30 mm (in Pressrichtung) x 70 mm (lotrecht zur Pressrichtung) ausreichend ist. Besitzt das Verdichtungselement dieser Presse einen Durchmesser von cá. 75 mm und eine mittlere Steigung von etwa 22° beträgt die Kulissenlänge cá. 95 mm. Die Eintauchtiefe des Verdichtungselementes kann also bis zu etwa 75 mm betragen. Da die Steigung erfindungsgemäß ungleichmäßig ist und zum Strang hin abnimmt, ergibt sich eine ausreichend große Verstellmöglichkeit der Eintauchtiefe des Verdichtungselementes zur Steuerung der Dichte des Stranges.

Für Strangpressen mit einer besonders großen Leistung sieht die Erfindung die Verwendung von zwei oder mehreren Rüttelrinnen vor. Die Rüttelrinnen sind gegeneinander arbeitend angeordnet und ihre beiden Gemengestrahle vereinigen sich nach den Rüttelrinnen. Ebenso ist es möglich, die Rüttelrinnen übereinander anzuordnen oder eine Rüttelrinne mit zwei oder mehreren Rinnenböden auszubilden. Der Vorteil dieser Ausführungen ist, dass dünnere Gemengestrahle eine höhere Geschwindigkeit erreichen können.

Die Verdichtung des Stranges wird im wesentlichen durch die Reibung des Stranges gegen den, soweit vorhanden, Dom und die formgebenden, starren Wände der Strangpresse bestimmt.
Bei der Herstellung von Palettenklötzen folgt in bekannter Weise nach dem Füll- und Pressraum der Heizkanal, gegebenenfalls mit Reaktoren oder Wasser und/oder Dampfinjektionselementen. Ein Ausführungsbeispiel ist in der Patentanmeldung 100 59 443.5 des Anmelders beschrieben.
Die Grobsteuerung der Verdichtung die etwa 60 bis cá. 95 % der notwendigen Verdichtung erzielten soll, erfolgt durch die Reibung der starren Elemente des Heizkanals und/oder des/der Reaktoren und der steuerbaren Anstellkraft der beweglichen Teile des Heizkanals gegen den Strang.
Als Feinsteuerung lehrt die Erfindung die Steuerung über die Eintauchtiefe des Verdichtungselementes in den Pressraum. Besonders einfach lässt sich die Eintauchtiefe des Verdichtungselementes bei Verwendung eines Füll- und Pressraumes gemäß der Anmeldung PCT/EP/99/01982 durch eine quasi Selbststeuerung regeln.
Die Erfindung verwendet als Antrieb einen entsprechend stabil gebautes Getriebe, durch das einerseits die gewünschte Drehzahl des Verdichtungselementes erzielt, bzw. bei einem vorteilhaften Verstellgetriebe geregelt wird. Andererseits kann der Antriebsmotor soweit außerhalb der Mitte der Abtriebswelle stehen, dass durch diese und das Verdichtungselement ein Dorn und/oder eine später beschriebene Vorrichtung zur Kühlung des Verdichtungselementes und/oder zur Wasser und/oder Dampfinjektion geführt und gelagert werden kann.

Das Getriebe und der Füll- und Pressraum sind zueinander verdrehgesichert aber längsbeweglich gelagert. Das Getriebe und der Füll- und Pressraum sind durch Hydraulikzylinder miteinander verbunden und werden durch eine einstellbare Kraft der Zylinder zusammengezogen. Bei einer leeren Strangpresse sind das Getriebe und der Füll- und Pressraum zusammengefahren und das Verdichtungselement steht in tiefster Stellung im Pressraum. Der Druck wird von einem kleinen Hydraulikaggregat erzeugt und mittels eines Druckbegrenzungsventils eingestellt. Vor diesem Ventil ist ein Rückschlagventil eingebaut, welches gegen die Pumpenseite wirkt. Bei der Strangbildung durch das Verdichtungselement entsteht eine Gegenkraft zur Verdichtungskraft. Diese wird das Getriebe und den Füll- und Pressraum auseinanderschieben wenn der im Druckbegrenzungsventil eingestellte Druck überschritten wird. Damit verringert sich die Eintauchtiefe des Verdichtungselementes in den Pressraum und die Verdichtung des Stranges, sowie die Verdichtungs- sowie die Gegenkraft verringern sich. Es ergibt sich quasi ein Gleichgewicht. Soll der Strang höher verdichtet werden, wird der Ansprechdruck des Druckbegrenzungsventils erhöht. Ist eine geringere Verdichtung gewünscht, wird der Ansprechdruck verringert.
In einer weiter automatisierten Ausführung sieht die Erfindung vor, die Produkte der Vorrichtung nach dem ablängen zu wiegen und den Ansprechdruck des Druckbegrenzungsventils von einem Rechner und/oder einer elektronischen Steuerung einstellen zu lassen. Da die Wiegung erst vorgenommen werden kann, wenn der Strang abgelängt ist, wird sich die Verdichtung erst nach einiger Zeit, aber immer genauer einpendeln. In der Praxis entsteht daraus kein Nachteil, da sich die Zusammensetzung des Gemenges im allgemeinen nur bei pflanzlichen Kleinteilen, insbesondere Holzkleinteilen verändert. Dies geschieht jedoch über einen längeren Zeitraum, so dass die Steuerung der Veränderung des Gemenges folgen kann.

Selbstverständlich kann anstelle der vorbeschriebenen Steuerung der Verdichtung auch eine Steuerung über die Eintauchtiefe des Domes wie in PCT/EP/99/01987 beschrieben, vorteilhaft angewandt werden, oder mit dieser kombiniert werden.

Für runde Stränge bildet die Erfindung die Steuerung der Verdichtung über den Dom vorteilhaft weiter. Runde Stränge drehen sich beim Verdichten um die eigene Achse. Dieses Bestreben ist bei einer Kulisse als Verdichtungselement etwas weniger ausgeprägt als bei den Spiralen gemäß PCT/EP/99/01987 aber immer noch vorhanden. Dies bedeutet, dass auf den Dom eine Torsionskraft wirkt.
Diese Kraft weiß die Erfindung vorteilhaft zu nutzen. Sie kuppelt den Dom hinter dem Getriebe an eine Hydraulikpumpe, gegebenenfalls unter Zwischenschaltung eines Übersetzungsgetriebes. Zu- und Ablaufseitig ist die Pumpe mit einem Tank verbunden. In die Leitung der Ablaufseite ist ein Druckbegrenzungsventil eingebaut. Die Verdichtung des Stranges lässt sich durch erhöhen des Ansprechdruckes des Ventils vergrößern, umgekehrt verringern. Selbstverständlich lässt sich auch diese Verstellmöglichkeit der Verdichtung mit den vorgenannten Verstellmöglichkeiten vorteilhaft kombinieren.

Das Förderelement selbst dreht sich schneller, als der Strang im Verhältnis zur Steigung des Förderelements transportiert wird. Sie ist deshalb dem Verschleiß unterworfen. Die Erfindung bildet das Verdichtungselement aus diesem Grund möglichst einfach aus, vorzugsweise als schweißbares Stahlgussteil, welches lediglich fertigbearbeitet und abriebfest behandelt werden muss. Der nur an der Stirnseite und am Umfang der Kulisse auftretende Verschleiß kann durch Aufschweißen und Nachbearbeiten mehrfach behoben werden, bevor das Verdichtungselement ausgetauscht werden muss. Das Verdichtungselement wird, beispielsweise mittels Schrauben, mit der Abtriebswelle des Getriebes verbunden. Das Drehmoment kann durch Mitnehmerzapfen und Nuten von der Getriebewelle auf das Verdichtungselement übertragen werden. Allerdings beschränkt sich die Erfindung nicht auf diese vorteilhafte Lösung sondern lässt hinsichtlich der Gestaltung dem Konstrukteur der Strangpresse einen weiten Spielraum zur Verbindung der genannten Teile.

Durch die vorgenannte Reibung entsteht Wärme, die, insbesondere bei hoher Verdichtung, großen Drehzahlen und/oder stark abrasiven Kleinteilen, wie z.b. Blähbetonkleinteilen, das Verdichtungselement bis zum Ausglühen erhitzen kann.
Die Erfindung sieht entweder eine übliche Doppelrohrkühlung vor oder sie weiß die Erhitzung in sehr vorteilhafter Weise zu nutzen.

Beim Strangpressen von Palettenklötzen auf Kolbenpressen müssen die Holzkleinteile auf cá. 2 % atro (absolut trocken) kostenintensiv heruntergetrocknet werden, wobei die letzten Trocknungsprozente die höchsten Kosten verursachen.
Bei Kolbenpressen ist dieser Trockenheitsgrad der Späne erforderlich, damit diese eine bestimmte Festigkeit gegen die Verformung besitzen. Sowohl zu weiche als auch zu starre Späne erzeugen eine zu große Projektion der Presskraft nach außen, gegen die starren Wände der Vorrichtung, welche beispielweise durch einen ersten Reaktor gemäß EP 0 376 175 verringert werden kann.
Beim Verdichten der Späne durch eine erfindungsgemäße Kulisse ist dieser Effekt jedoch kaum zu beobachten. Bei der vorgenannten Kulisse können sogar Späne mit einer Feuchtigkeit bis mehr als 20 % atro verdichtet werden. Das Wasser in den Spänen kühlt, durch sein verdampfen einerseits das Verdichtungselement, andererseits erweicht es die Späne und verringert die erforderliche Presskraft. Werden die Palettenklötze aus Altholz erzeugt, das den billigsten Werkstoff für Palettenklötze darstellt, kann weitestgehend oder überwiegend auf eine Trocknung verzichtet werden, da ihre durchschnittliche Feuchte um 20 % atro beträgt.

Auch bei der Verwendung von Neuspänen werden erhebliche Trocknungskosten eingespart, da eine deutlich höhere Feuchtigkeit der Späne zulässig ist.

Holzbriketts zum Verheizen müssen auf möglichst mehr als 1,2 kg/dm³ verdichtet werden, damit die Späne auch ohne Bindemittel zusammenbacken. Kolbenpressen können Holzkleinteile mit einer Feuchte von etwa 5 bis 15 % atro verarbeiten, ansonsten halten die Kleinteile nicht zusammen und der Strang zerfällt. Auch hier kann die erfindungsgemäße Vorrichtung mit feuchteren Kleinteilen arbeiten.
Die Erfindung lehrt hier jedoch auch die zusätzliche Wasser- und/oder Dampfinjektion durch das Zentrum des Verdichtungselementes. Die Kulisse fördert nur bis zu einem bestimmten Steigungswinkel. Geometriebedingt ist die Steigung am Umfang geringer als zur Achsmitte hin. Bei Tetra-pak- Kleinteilen, oder Blähbetonkleinteilen, welche eine mehr runde Form besitzen sowie bei Palettenklötzen mit einer Verdichtung von lediglich etwa 0,6 kg/dm³, verreibt die Kulisse die Kleinteile zueinander und erzielt eine annähernd gleichmäßige Verdichtung. Spürbare Unterschiede können jedoch bei den hochverdichteten Holzbriketts auftreten. Zwar halten mit einer Kulisse erzeugte Briketts grundsätzlich besser zusammen, da durch den Spalt zwischen dem Verdichtungselement und der Wand des Pressraumes eine höchstverdichtete Randzone erzeugbar ist. Ein Nachteil, besonders hinsichtlich des Brennwertes ist jedoch u.U. durch eine geringere Verdichtung der Kleinteile zum Strangzentrum hin zu erwarten. Diesen allfälligen Nachteil weiß die Erfindung jedoch durch eine zusätzliche Wasserund/oder Dampfinjektion von der Drehachse des Verdichtungselementes oder, wenn ein Dom verwendet wird, von diesem her zu beseitigen. Von Vorteil ist, dass damit zugleich das Verdichtungselement gekühlt wird. Feuchtere oder mit Dampf oder heißem Wasser beaufschlagte Späne lassen sich mit einer geringeren Kraft verdichten. Da das Verdichtungselement, wie bereits ausgeführt schneller dreht als der Strang vorgeschoben wird, ergibt sich, wenn sich die Injektion auf den notwendig großen Innenbereich des Stranges beschränkt, eine weitgehend gleichmäßige Verdichtung des Briketts, bis auf die vorzugsweise mit Höchstverdichtung gepresste Randzone.

Bei größeren Querschnitten wie z.B. Palettenklötzen der Dimension 145 x 145 mm kann das Verdichtungselement in vorteilhafter weise auch zweigängig ausgeführt werden.
Die Steigung der Kulisse kann bei weniger verdichteten Kleinteilen linear sein und abhängig von der Gemengeart etwa 8° bis 35° betragen. Besonders vorteilhaft ist es jedoch die Steigung ungleichförmig und angepasst an den Widerstand zu gestalten, den das Gemenge der Verdichtung entgegensetzt.
Werden Papierkleinteile verdichtet, erfolgt zunächst eine sehr große Volumenverringerung ohne bedeutende Kraft, erst wenn die Kleinteile bereits dicht an dicht liegen steigt die notwendige Verdichtungskraft bei einer geringen Volumenverringerung sehr schnell auf das notwendige Maß von bis zu 1400 kp/cm² an. Die Erfindung lehrt bei diesem Gemengebeispiel die Steigung am Kulissengrund mit cá. 20° bis etwa 45° beginnen zu lassen. Die Steigung verringert sich parabelförmig zur Kulissenspitze auf einen Winkel von cá. 2° bis etwa 8°.
Palettenklötze werden auf eine Dichte von lediglich etwa 0,6 kg/dm³ verdichtet. Die erforderliche Verdichtungskraft beträgt einschließlich der Reibungsverluste weniger als 70 kp/cm². Hier lehrt die Erfindung die Steigung am Kulissengrund ebenfalls mit 20° bis 45° beginnen zu lassen und die Steigung mehr bogenförmig derart zu verringern, dass die Steigung an der Kulissenspitze 5° bis etwa 15° beträgt.
Die optimale Verringerung der Steigung ist ganz wesentlich von der Gemengeart abhängig, insbesondere vom Verhältnis der Schüttdichte und der Enddichte, sowie bei Holzkleinteilen von der Feuchtigkeit. Weiter hat das Profil des Stranges und die sich daraus ergebende Form der Füll- und Pressraumes einen entscheidenden Einfluss. Die optimale Geometrie der Kulisse ist deshalb durch Versuche festzustellen.

Insbesondere bei runden Strängen kann über den Abstand der Kulisse zur Innenwand des Füll- und Pressraumes die Dicke einer höher verdichteten Randzone des Stranges bestimmt werden. Die Dicke dieser Randzone entspricht in etwa dem Abstand, wobei sich bei Versuchen ergab, dass ein geringerer Abstand von 0,5 bis 1,5 mm eine besonders hochverdichtete Randzone bewirkt. Soll die Randzone dicker ausgeführt aber nur um ein geringeres Maß höher verdichtet werden, als die Kernzone des Stranges wird das Abstandsmaß entsprechend größer gewählt, beispielsweise 1,5 bis 8 mm bei Strängen aus Holzkleinteilen von 95 mm Durchmesser.

Im Gegensatz zu Kolbenpressen haben die Kleinteile bei Kulissenpressen ein deutlich geringeres Bestreben sich nach außen, gegen die Wände des Pressraumes zu drücken. In der Praxis bedeutet dies, dass die Ecken eines Palettenklotzes der Dimension 100 x 145 mm eine geringere Verdichtung aufweisen würden.
Diesen Nachteil beseitigt die Erfindung dadurch, dass sie das Verdichtungselement parallel zur langen Seite des Profils hin- und herfährt. Eine andere, vorteilhafte Möglichkeit ist, das Getriebe samt dem Verdichtungselement um die Mittelachse des Pofiles hin und her schwenken zu lassen.
Für quadratische aber auch für polygone Profile sieht die Erfindung vor, das Verdichtungselement wesentlich kleiner als den Füll- und Pressraum auszuführen und das Verdichtungselement in einer Bahn im Abstand zur Innenkontur des Füll- und Pressraumes rotieren zu lassen.

In einer weiteren Ausgestaltung der Vorrichtung lehrt die Erfindung dir Herstellung von Pellets.
Für die Herstellung von Pellets verwendet die Erfindung verwendet eine kontinuierliche Strangpresse gemäß DE 101 01 386 in der Ausführung von Fig. 14, jedoch ohne Heizkanal und angepassten, zylindrischen Pressraum. Vor die Spitze des Verdichtungselementes setzt sie eine Lochscheibe, in einer derartigen Tiefe im Pressraum, dass das Verdichtungselement nicht nur an der Lochscheibe anliegen, sondern noch in einer Länge, die bis zu etwa 30° der Schraubenkontur entspricht, tiefer in den Pressraum eintauchen könnte, würde dies nicht durch die Lochscheibe verhindert. Das bedeutet, dass das Verdichtungselement mit einer regelbaren Kraft und in einer regelbaren Stellung, durch die Ansteuerung der das Verdichtungselement und das Antriebsteil bewegenden Kraftgeber, in einer gewünschten Tiefe und/oder mit einer gewünschten Kraft in den Pressraum eintaucht. Die Lochscheibe, künftig als Matrize bezeichnet, ist verdreh- und längsgesichert im Pressgehäuse gelagert. Die Löcher in der Matrize sind entweder zylindrisch oder weiten sich stufenförmig oder konisch in Pressrichtung auf. Sie sind vorzugsweise in Gruppen von mehreren Löchern um ein Mittelloch, durch das ein Führungsdom ragt, angeordnet. Jedes dieser Löcher bildet quasi eine Pressmatrize. Weiter ist ihre Anordnung derart, dass im Umfang keine nicht von einem Loch durchtrennte Ringfläche gebildet wird.

Die Kleinteile werden in bekannter Weise durch das Verdichtungselement gegen de Matrize gedrückt und vorverdichtet. Ihre endgültige Verdichtung von bis etwa 1,2 kg/dm³ bei Holzkleinteilen erhalten Sie bei ihrem Transport durch die einzelnen Löcher. Beim Rotieren des Verdichtungselementes werden die Kleinteile dadurch, dass die Vorderkante des Verdichtungselementes an der Matrize ansteht, oder sich in einem geringen Abstand davon befindet, nicht um die Einlaufkante der Löcher gequetscht. Sie werden quasi an der Drehrichtungsabgewandten Seite der Löcher abgeschert. Bereits durch diese, in Pressrichtung angeordneten Löcher konnte ein guter Austrag bei einer verhältnismäßig geringen Antriebsleistung erzielt werden.
Bei einem Versuchsaufbau wurden die Löcher derart in einem Winkel schräg zur Pressrichtung gestellt, dass die sie in einem rechten oder in einem spitzen Winkel zwischen 60° und 90° zur Steigung an der Vorderkante des Verdichtungselementes standen. Überraschenderweise sank die benötigte Antriebsleistung der Vorrichtung ganz erheblich, während sich sowohl die Austragsleistung wie die Qualität der Pellets erhöhten. Mit der sich verringernden Reibung sank der Verschleiß sowohl des Verdichtungselementes als auch der, der Matrize.
Dadurch, dass das Verdichtungselement durch die Kraftgeber in Pressrichtung bewegt werden kann, ist es an der Vorderkante quasi selbstschärfend und kann nachgestellt werden. Im Gegensatz zu den vorbekannten Kollerpressen, bei denen der sehr kostspielige Außenläufer einem starken Verschleiß unterliegt und relativ oft ausgewechselt werden muss, kann eine erfindungsgemäße Matrize mehrmals nachgearbeitet werden. Ihre Herstellungskosten betragen nur einen Bruchteil von denjenigen eines Außenläufers einer Kollerpresse.

Werden die Löcher in der Matrize drahterodiert, lassen sich nicht nur runde sondern beliebige Lochformen herstellen. Im Gegensatz zu den Außenläufern besitzen die Matrizen eine deutlich größere Stabilität und neigen nicht zum Brechen.

Die Erfindung lehrt deshalb die Schrägstellung der Löcher in einem Winkel von ca. 60° bis zu etwa 90° zur Druckfläche des Verdichtungselementes.

Bei Versuchen hat sich herausgesellt, dass eine Feuchte bei Holzkleinteilen von bis zu etwa 20% atro die geringsten Verdichtungskräfte beansprucht und sich auf die Qualität der Pellets vorteilhaft auswirkt. Bei zu trockenen Holzkleinteilen wird jedoch ein deutlich höherer Kraftbedarf notwendig. Die Erfindung nützt die Erkenntnis, dass pflanzliche insbesondere aber Holzkleinteile ihre Festigkeit quasi sofort verlieren, wenn sie mit Dampf, unter Druck stehendem Heißwasser oder heißem Wasser beaufschlagt werden. Sie nützt diese Erkenntnis, in der Form, dass sie durch das Verdichtungselement, entweder im Bereich der teilweisen Verdichtung, oder aus dem, durch das Verdichtungselement ragenden Dom H₂O in Form von Dampf, vorzugsweise weitgehend trockenen oder überhitzen Dampf, heißes Wasser oder unter Druck stehendes Heißwasser mit einer Temperatur von ca. 105 °C bis etwa 200° C in den noch nicht vollständig verdichteten Strang einbringt.
Damit keine Kleinteile, insbesondere staubförmiger Abrieb der Kleinteile die Austrittsöffnungen verstopfen können, bildet die Erfindung die schraubenförmig gewundene Förderfläche des Verdichtungselementes in mindestens einer, vorzugsweise jedoch mit 2 bis 5 Stufen aus. Die Höhe einer jeden Stufe, in der schraubenförmigen Kontur der Druckfläche gegen die Pressrichtung zurückgesetzt wird beträgt etwa 0,5 bis 4 mm, kann bei Bedarf aber größer sein. Die Stufen werden vorzugsweise an jedem Stufenende scharfkantig ausgeführt. Unmittelbar hinter dem Absatz ordnet die Erfindung die Austrittsöffnungen für das H₂O an. Die können sowohl Löcher in einem Durchmesserbereich von 1 bis etwa 6 mm sein, als auch Langlöcher. Das H₂O kann mittels einer handelsüblichen Drehdurchführung in das Verdichtungselement eingebracht werden und wird mit Bohrungen zu den Austrittsöffnungen geführt.

Diese Art der H₂O- Zuführung weiß die Erfindung auch für das kontinuierliche Strangpressen von Strängen zu nutzen. Sie setzt das vorgenannte Verdichtungselement auch für Strangpressen gemäß DE 101 01 386, anstatt oder kombiniert mit einem Reaktor gemäß EP 0 376 175 oder in der Weiterentwicklung von DE 198 38 187 Fig. 12, zur Strangerwärmung ein. Durch dies vorteilhafte Art der Strangerwärmung auf Abbindetemperatur kann erheblich H₂O eingespart werden, das der Dampf nicht mehr durch die bereits kondensierte H₂O Schicht dringen muss.

Die Erfindung wird nachstehend ohne Beschränkung des allgemeinen Erfindungsgedankens anhand von Ausführungsbeispielen unter Bezugnahme auf die Zeichnungen exemplarisch beschrieben, wobei auf die im übrigen bezüglich der Offenbarung aller im Text nicht näher erläuterten erfindungsgemäßen Einzelheiten ausdrücklich hingewiesen wird. Es zeigen:
**Fig. 1** eine Vorderansicht eines Verdichtungselementes im Teilschnitt.
**Fig. 2** eine Seitenansicht eines Verdichtungselementes in Richtung des Pfeils X gem. Fig. 1.
**Fig. 3** eine Seitenansicht eines Verdichtungselementes in Richtung des Pfeils Y gem. Fig. 1.
**Fig. 4** eine Abwicklung der Außenkontur einer Kulisse.
**Fig. 5** eine Abwicklung der Außenkontur einer Kulisse.
**Fig. 6** eine Abwicklung der Außenkontur einer Kulisse.
**Fig. 7** eine Abwicklung der Außenkontur einer Kulisse.
**Fig. 8** eine Abwicklung der Außenkontur eines Verdichtungselementes mit zwei Kulissen auf dem Umfang.
**Fig. 9** einen Teilschnitt quer durch den Pressraum.
**Fig. 10** einen Teilschnitt quer durch den Pressraum
**Fig. 11** einen Schnitt auf der Linie A-A gemäß Fig. 9.
**Fig. 12** einen Schnitt durch eine kontinuierliche Strangpresse für Rundstränge.
**Fig. 13** einen Schnitt durch eine kontinuierliche Strangpresse für Rund- oder Quadratstränge.
**Fig. 14** einen Schnitt durch eine Strangpresse für Holzbriketts zum Verheizen.
**Fig. 15** einen Schnitt durch einen Strangpresse auf der Linie A-A gemäß Fig.9.
**Fig. 16** einen Längsschnitt durch eine kontinuierliche Presse.
**Fig. 17** einen Längsschnitt durch eine kontinuierliche Presse.
**Fig. 18;.,** einen Längsschnitt durch eine Presse für Pellets.
**Fig. 19.,** einen Längsschnitt durch eine Presse für Pellets auf der Linie I - I gemäß Fig. 18.
**Fig. 20.,** eine Draufsicht auf eine Matrize
**Fig. 21.,** eine Unteransicht der Matrize gemäß Fig. 4
**Fig. 22.,** einen Teilschnitt auf der Linie II-II gemäß Fig.3 bzw. auf der Linie III- III gemäß
Fig. 20.

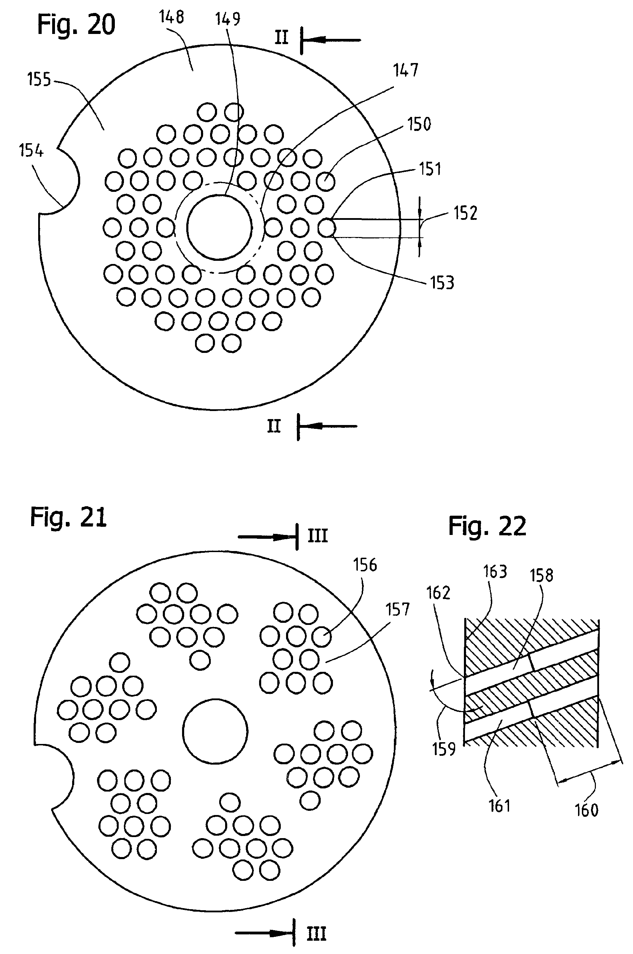

Die Figuren 20,21, und 22 sind maßstabsgleiche Einzelansichten des selben Bauteils.

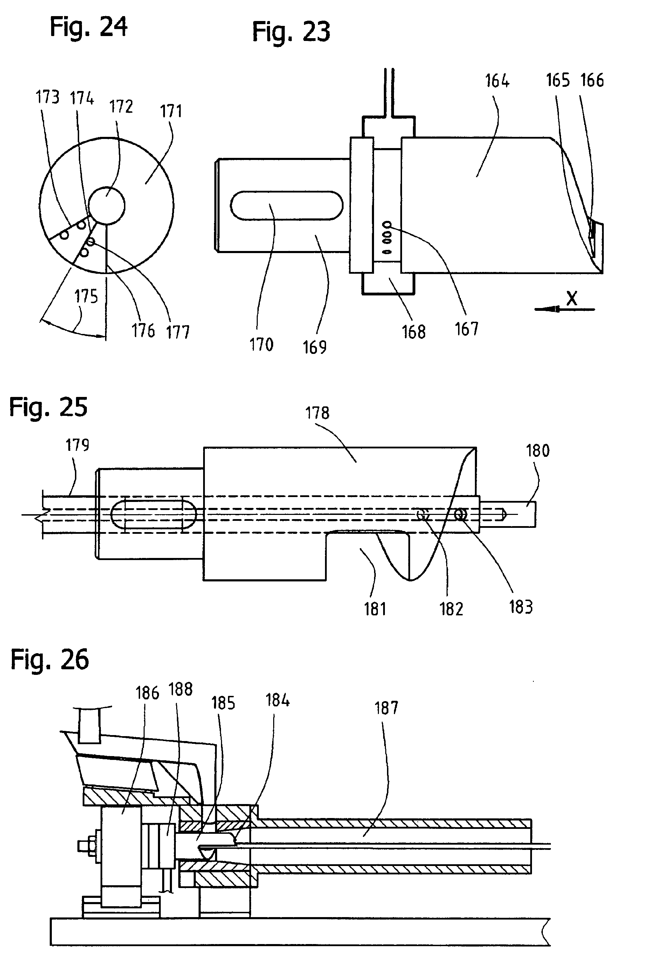

**Fig. 23.,** eine Seitenansicht eines Verdichtungselementes.
**Fig. 24.,** eine Ansicht eines Verdichtungselementes in Richtung des Pfeils X gemäß Fig. 23.
**Fig. 25.,** eine Seitenansicht eines Verdichtungselementes mit Dom.
**Fig. 26.,** einen Schnitt durch eine Strangpresse für Stränge.

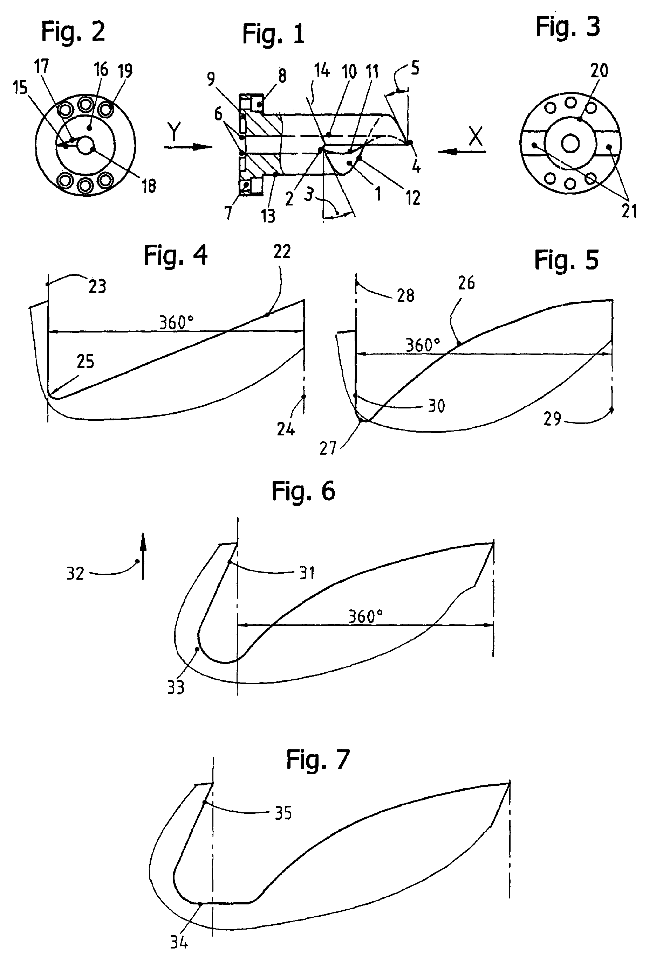

**Fig. 1** zeigt eine Vorderansicht eines Verdichtungselementes. Die Kulisse **1** beginnt im Kulissengrund **2.** Die Steigung im Winkel **3** von cá. 8° bis etwa 35 ° ist bis zur Kulissenspitze **4** im Ausführungsbeispiel konstant. Diese Ausführung wird lediglich bei Gemengen angewandt, bei denen die Volumenverringerung in etwa gleichmäßig zum Anstieg der Verdichtungskraft geschieht. Dies ist im wesentlichen bei geringer verdichteten Strängen der Fall. Bei den meisten Anwendungen wird die Steigung abnehmend ausgeführt. D.h. die Steigung der Kulisse **1** ist am Kulissengrund **2** mit 20° bis 45° am größten und nimmt zur Kulissenspitze **4** hin ab.
Die Abnahme der Steigung ist beispielsweise bei Papierkleinteilen in etwa parabelförmig, wobei die Steigung im Maß **5** 2° bis 8° betragen kann. Bei Palettenklötzen aus Holzkleinteilen verringert sich die Steigung in etwa bogenförmig. Bei Versuchen haben sich Winkel im Maß **5** von <5°bis etwa 15° als besonders geeignet erwiesen.
Das Drehmoment des Antriebes wird durch die Nutflanken **6** auf das Verdichtungselement übertragen, welches im Ausführungsbeispiel über die Schraubenlöcher **7** und **8** durch Zylinderschrauben mit der Abtriebswelle des Antriebes verbunden ist. Die Zentrierung erfolgt durch die Zylindersenkung **9.**
Im Ausführungsbeispiel ist das Verdichtungselement mit einer Bohrung **10** versehen, durch welches der Dom und/oder Dampf und/oder Wasser geführt werden. Durch den Dorn wird im Strang ein Loch gebildet. Das Einbringen von Wasser und/oder Dampf hat die Aufgabe, das Verdichtungselement zu kühlen und/oder die Kleinteile der Innenzone des Stranges zu erweichen. Dadurch ergibt sich insbesondere bei hochverdichteten Strängen, wie Holzbriketts eine im Profil des Stranges gleichmäßige Dichte, trotzdem die Steigung der Kulisse entlang der Bohrungswand **11** größer ist als an der Außenkontur **12.**
Der zylindrische Teil **13** des Verdichtungselementes ist um ein nachstehend definiertes Abstandsmaß kleiner als der zylindrische Teil des Füllraumes. Das Abstandsmaß ist z.b. beim Pressen von z.B. länglichen Papierstreifen sehr gering, damit die Außenkante der Kulisse **12** als Schneide wirkt und die Kleinteile an der Eintrittsöffnung der Füllraumes abschert oder abquetscht.
Etwa gleich groß wie das Abstandsmaß ist die höher verdichtete Randzone des Stranges. Bei runden Palettenklötzen kann es etwa 0,5 bis 8 mm betragen und wird vom Verwender der Stränge bestimmt.
Bei kleineren Verdichtungselementen wird der Kulissengrund **2** vorteilhaft in einem von der Fertigung bestimmten Radius ausgeführt. Wird das Verdichtungselement gefräst, achtet der Konstrukteur auf einen Radius, der eine schnelle Fertigung der Kulisse ermöglicht. Wird die Kulisse gegossen, kann der Kulissengrund nahezu spitz ausgeführt werden.

**Fig. 2** zeigt eine Seitenansicht eines Verdichtungselementes in Richtung des Pfeils X gemäß Fig. 1. Die parallel zur Pressrichtung laufende, druckabgewandte Fläche **15** der Kulisse **16** ist in ihrer Verlängerung zum Mittelpunkt des Verdichtungselementes gerichtet. Um ein größeres Fördervolumen zu erzielen ist es vorteilhaft, die druckabgewandte Seite **17** gegf. tangential zur Bohrungswand **18** zu fertigen. Die Befestigung des Verdichtungselementes erfolgt, wie bereits ausgeführt, über die Bohrungen **19.**

**Fig. 3** zeigt eine Seitenansicht eines Verdichtungselementes in Richtung des Pfeils Y gemäß Fig. 1. Das Drehmoment des Antriebes wird durch die Nuten **20** auf das Verdichtungselement übertragen. Die Zentrierung des Verdichtungselementes erfolgt über die Zylindersenkungen **21.**

**Fig. 4** zeigt eine Abwicklung der Außenkontur einer Kulisse. Im Ausführungsbeispiel ist die Steigung der Kulissenaußenkante **22** gleichförmig. Der Abstand zwischen den Strichpunktlinien **23** und **24** entspricht 1 Umdrehung des Verdichtungselementes oder 360°. Die Strichpunktlinien liegen in Pressrichtung. Die Größe des Radius im Maß **25** ist abhängig vom Durchmesser des Verdichtungselementes. Ja größer das Verdichtungselement, desto größer kann der Radius gewählt werden, was eine schnellere Bearbeitung beim Fräsen ermöglicht und den Transportraum des Verdichtungselementes vergrößert. Bei kleineren Verdichtungselementen und wenn sie im Gießverfahren hergestellt werden, kann der Radius sehr klein ausgeführt werden.

**Fig. 5** zeigt eine Abwicklung der Außenkontur einer Kulisse. Im Ausführungsbeispiel ist die Steigung der Kulissenaußenkante **26** ungleichförmig. Sie beträgt im Kulissengrund **27** cá. 20° bis etwa 45° und verringert sich je nach Gemengeart und Verdichtung auf bis zu weniger als 1,5°. Die Abnahme der Steigung kann sowohl in Form einer Parabel als auch mehr bogenförmig erfolgen und ist wiederum von der Gemengeart und dem Widerstand gegen die Verdichtung und bei Holzkleinteilen insbesondere vom Schüttgewicht und der Feuchte abhängig. Die Strichpunktlinien **28** und **29** liegen im Abstand von 360° oder einer Umdrehung des Verdichtungselementes zueinander und in Pressrichtung. Die druckabgewandte Rückfläche des Verdichtungselementes liegt in Pressrichtung und ist nicht hinterschnitten.

**Fig. 6** zeigt eine Abwicklung der Außenkontur einer Kulisse. Im Ausführungsbeispiel steht die druckabgewandte Seite **31** der Kulisse schräg zur Pressrichtung (Richtung des Pfeils **32).** Der Kulissengrund **33** ist in einem größeren Radius ausgeführt, um das Transportvolumen des Verdichtungselementes zu vergrößern und die Leistung der Vorrichtung zu steigern.

**Fig. 7** zeigt eine Abwicklung der Außenkontur einer Kulisse. Das Ausführungsbeispiel zeigt ein Verdichtungselement mit größerem Durchmesser. Hier ist es bei bekannter Steigung der Kulissensteigung möglich, den Kulissengrund **34** breiter auszuführen und dadurch das Transportvolumen des Verdichtungselementes zu vergrößern. Aus gleichem Grund ist die druckabgewandte Seite **35** ebenfalls schräg zur Pressrichtung gestellt.

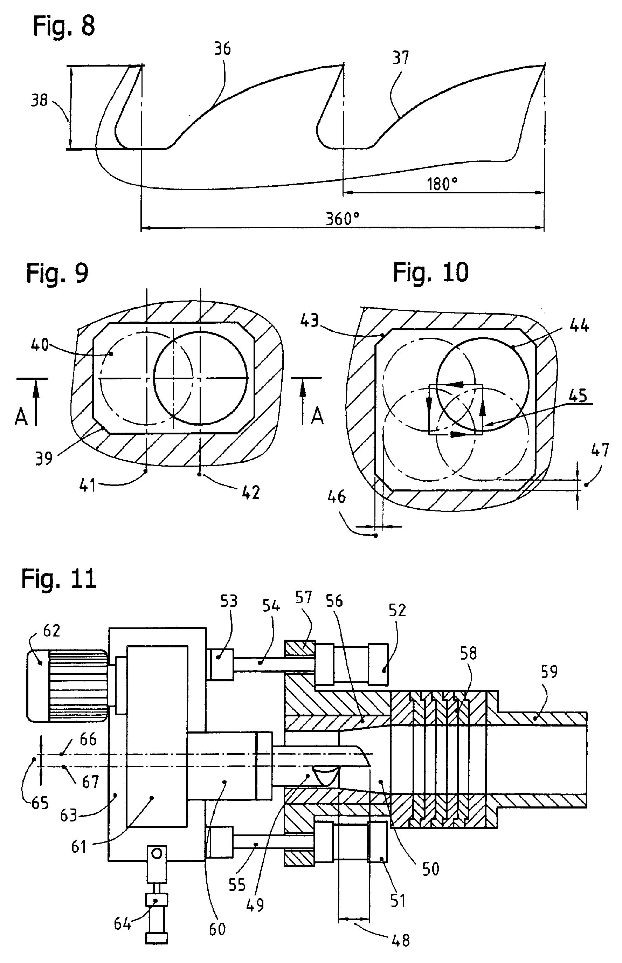

**Fig. 8** zeigt eine Abwicklung der Außenkontur eines Verdichtungselementes mit zwei Kulissen auf dem Umfang. Diese Ausführung mit zwei Kulissen **36** und **37** eignet sich besonders für Stränge mit großem Querschnitt, wie zum Beispiel für Palettenklötze der Dimension 145 x 145 mm, wenn die Tiefe **38** der Kulisse eine ausreichende Befüllung der Vorrichtung ermöglicht. Selbstverständlich ist auch jede andere Ausbildung der Kulissengeometrie für zwei oder mehrere Kulissen auf dem Umfang des Verdichtungselementes vorteilhaft möglich.

**Fig. 9** zeigt einen Teilschnitt quer durch den Pressraum. Die Innenkontur **39** entspricht einem Palettenklotzprofil, etwa der Dimension 100 x 145. Das Förderelement **40** wird beim Betrieb zwischen den Mittellinien **41** und **42** hin und her bewegt. Die Drehzahl des Förderelementes ist von dar Art der Kleinteile abhängig, von der gewünschten Ausstoßleistung der Leistung des nachfolgenden Aushärtekanals. In der Praxis kann die Drehzahl zwischen etwa 50 und 1000 Umdrehungen/Minute liegen. Die Hubgeschwindigkeit des Verdichtungselementes zwischen den Mittellinien führt die Erfindung vorzugsweise einstellbar aus. Sie ist ganz wesentlich von der Gemengeart abhängig. Eine Hin- und- Herbewegung kann während 3 bis 30 Umdrehungen des Verdichtungselementes erfolgen.

**Fig. 10** zeigt einen Teilschnitt quer durch den Pressraum. Die Innenkontur **43** des Füll- und Pressraumes entspricht einem Palettenklotzprofil, etwa der Dimension 145 x 145 mm. Das Verdichtungselement **44** wird beim Betrieb entlang der Bahn **45** bewegt. Die Abstände in den Maßen **46** und **47** des Verdichtungselementes zur Innenkontur **43** des Füll- und Pressraumes sind etwa gleich groß und bestimmen die Dicke der höher verdichteten Randzone des Stranges. Die Bahnbewegung beschränkt sich nicht auf die dargestellte Strangform sondern ist auch bei Polygonen vorteilhaft durchführbar.

**Fig. 11** zeigt einen Schnitt auf der Linie A-A gemäß Fig. 9. Die Eintauchtiefe **48** des Verdichtungselementes **49** in den Pressraum **50** wird durch die Hydraulikzylinder **51** und **52** geregelt. Der Pressraum **50** ist gemäß PCT/EP/99/011982 ausgeführt. Die Getriebeaufhängung **53** ist längsbeweglich und an den Kolbenstangen **54** und **55** befestigt. Bei einer leeren Strangpresse sind das Getriebe und der Füll- und Pressraum zusammengefahren und das Verdichtungselement steht in tiefster Stellung im Pressraum. Der Druck wird von einem kleinen Hydraulikaggregat erzeugt und mittels eines Druckbegrenzungsventils eingestellt. Vor diesem Ventil ist ein Rückschlagventil eingebaut, welches gegen die Pumpenseite wirkt. Bei der Strangbildung durch das Verdichtungselement entsteht eine Gegenkraft zur Verdichtungskraft. Diese wird das Getriebe und den Füll- und Pressraum auseinanderschieben wenn der im Druckbegrenzungsventil eingestellte Druck überschritten wird. Damit verringert sich die Eintauchtiefe des Verdichtungselementes in den Pressraum und die Verdichtung des Stranges, sowie die Verdichtungs- sowie die Gegenkraft verringern sich. Es ergibt sich quasi ein Gleichgewicht. Soll der Strang höher verdichtet werden, wird der Ansprechdruck des Druckbegrenzungsventils erhöht. Ist eine geringere Verdichtung gewünscht, wird der Ansprechdruck verringert.
Die Verschleißbüchse **56** ist im Füllraumgehäuse **57** eingebaut, an welches sich im Ausführungsbeispiel ein Reaktor **58** gemäß EP 0 376 175 und eine starrer Vorheizgang **59** anschließen. Weiter folgt ein, hier nicht dargestellter Heizkanal in üblicher Ausführung. Das Verdichtungselement ist an die Abtriebswelle **60** des Getriebes **61** angebaut. Der Antrieb erfolgt durch den Motor **62.** Das Getriebe ist querbeweglich auf dem Schlitten **63** gelagert und wird von dem Wehgeber **64,** zum Beispiel einem Hydraulikzylinder, im Maß **65** im Abstand der Strichpunktlinien **66** und **67** hin und her bewegt, wie unter Fig. 9 beschrieben.

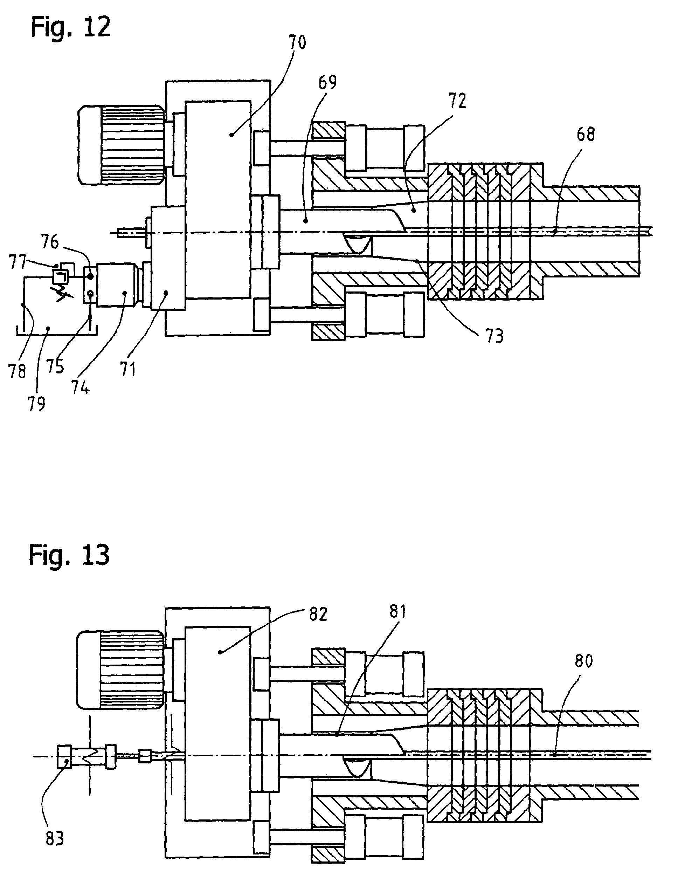

**Fig. 12** zeigt einen Schnitt durch eine kontinuierliche Strangpresse für Rundstränge. Die Strandpresse verwendet einen Dom **68,** der durch das Verdichtungselement **69,** das Antriebsgetriebe **70** und das Bremsgetriebe **71** hindurch geführt und an letzterem befestigt ist. Die Verdichtung wird im Ausführungsbeispiel dreifach geregelt. Die Grobsteuerung wird in vorbekannter Weise durch die Spanzylinder des hier nicht dargestellten Heizkanals vorgenommen. Die Feinsteuerung geschieht mittels der Selbstregelung über die Eintauchtiefe des Verdichtungselementes **69** in den Pressraum **72.** Die Kontur des Pressraumes entspricht PCT/EP/99/011982. Da das Gemenge beim Verdichten durch eine Kulisse nur ein reduziertes Besteben hat, radial auszuweichen und gegen die Innenwände **73** des Pressraumes **72** zu drücken, wird die Verdichtung höher, wenn das Verdichtungselement **69** weiter in den Pressraum **72** ragt und geringer, wenn es weniger tief eintaucht. Die keilförmige Erweiterung ist entsprechend ausgebildet. Die genaue keilförmige Erweiterung wird im Versuch ermittelt. Als Richtwert kann die Angabe für Rundklötze von 0,3 mm bis etwa 2,5 mm im Halbmesser dienen. Als Feinststeuerung verwendet das Ausführungsbeispiel den Dom **68.** Er ragt in den Strang, welcher eine Drehbewegung um die eigene Achse ausführen will. An das Bremsgetriebe **71** ist eine Hydraulikpumpe **74** gekoppelt. Das Öl zum Bremsen wird mit der Leitung **75** angesaugt. Es wird durch die Rücklaufleitung **76** aus der Hydraulikpumpe in das Druckbegrenzungsventil **77** und durch die Leitung **78** zurück in den Tank **79** geführt. Der Rücklaufdruck ist durch das Druckbegrenzungsventil **77** einstellbar. Mit ihm wird die Bremskraft gegen das Mitdrehen des Domes **68** mit dem Strang eingestellt Je höher der Druck eingestellt ist, desto höher wird der Strang verdichtet. Mit umgekehrter Einstellung wird die Dichte des Stranges verringert. Die Feinststeuerung ist quasi eine Ergänzung zur Feinsteuerung. In vielen Anwendungsfällen kann auf sie verzichtet werden. In diesen Fällen wird der Dom **68** verdreh- und längsgesichert an der Rückwand des Antriebsgetriebes **70** befestigt. Umgekehrt ist die billigere Feinststeuerung in der Lage, die aufwendigere Feinsteuerung bei bestimmten Anwendungsfällen zu ersetzen.

**Fig. 13** zeigt einen Schnitt durch eine kontinuierliche Strangpresse für Rund- oder Quadratstränge. Der Dom **80** ist durch das Verdichtungselement **81** und das Antriebsgetriebe **82** geführt und an einen Hydraulikzylinder **83** gekoppelt. Mittels des Hydraulikzylinders **83** kann die Eintauchtiefe des Domes **80** in den Strang geregelt werden. Je tiefer der Dorn in den Strang eintaucht, desto höher wird die Verdichtung und umgekehrt geringer.

Die Feinststeuerung über die Eintauchtiefe des Domes in den Strang ist ebenfalls eine Ergänzung zur Feinsteuerung. In vielen Anwendungsfällen kann auf sie verzichtet werden. In diesen Fällen wird der Dorn **80** verdreh- und längsgesichert an der Rückwand des Antriebsgetriebes **82** befestigt. Umgekehrt ist die billigere Feinststeuerung in der Lage, die aufwendigere Feinsteuerung bei bestimmten Anwendungsfällen zu ersetzen.

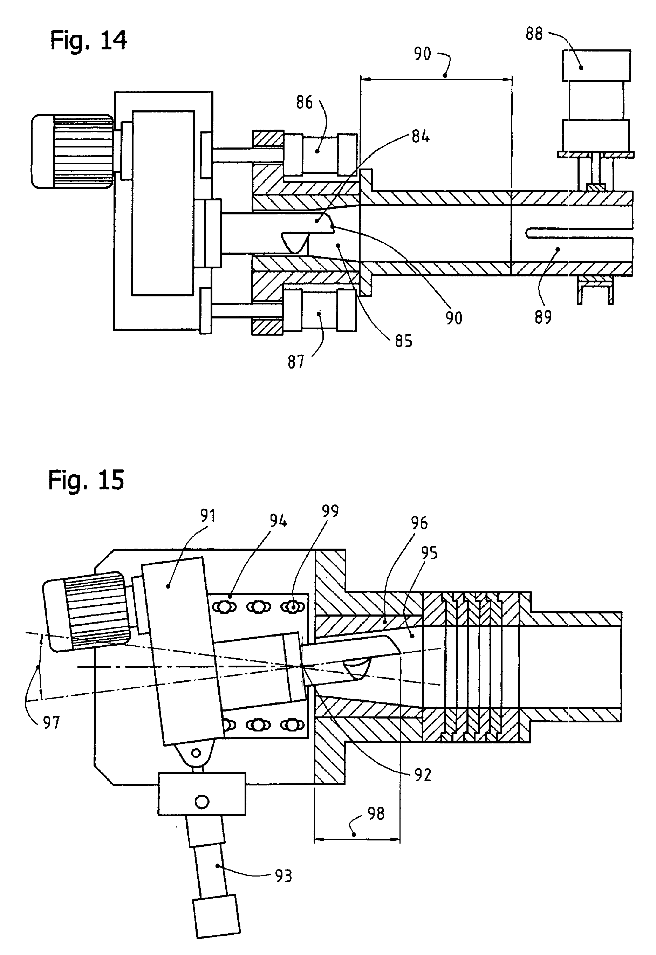

**Fig. 14** zeigt einen Schnitt durch eine Strangpresse für Holzbriketts zum Verheizen. Diese Pressen werden überwiegend ohne Dom ausgeführt. Eine Feinststeuerung ist im allgemeinen nicht notwendig. Die Dichte der Stränge liegt über 1 kg/dm³, meist bei 1,2 kg/dm³, also nahe der Höchstverdichtung von Holzkleinteilen. Die Steuerung der Verdichtung erfolgt im Ausführungsbeispiel durch die Eintauchtiefe des Verdichtungselementes **84** in den Pressraum **85,** geregelt mit den Zylindern **86** und **87,** sowie durch den Querzylinder **88,** der das Verdichterrohr **89** zusammengepresst. Der Druck des Querzylinders **88** wird händisch verstellt. Für die Zylinder **86** und **87** ist die vorbeschriebene Selbststeuerung vorgesehen. Das Verdichtungselement besitzt eine in Pressrichtung abnehmende Steigung der Kulisse **90.**

**Fig. 15** zeigt einen Schnitt durch einen Strangpresse auf der Linie A-A gemäß Fig.9. Im Ausführungsbeispiel schwenkt die gesamte Verdichtungseinheit **91** um den Drehpunkt **92.** Als Weggeber zum Schwenken verwendet die Erfindung einen drehbar gelagerten Hydraulikzylinder **93.** Die Verdichtungseinheit ist auf einer längsbeweglichen Grundplatte **94** gelagert. Die Strangverdichtung wird im Ausführungsbeispiel ausschließlich durch die Spannzylinder des hier nicht dargestellten Heizkanals gesteuert. Die Verwendung eines Dornes ist bei dieser Ausführung nicht vorgesehen, aber eingeschränkt möglich.
Der Füll- und Pressraum **95** ist über die gesamte Länge der Verschleißbüchse **96** keilförmig erweitert ausgebildet. Der Winkel der keilförmigen Erweiterung ist in etwa identisch mit dem Schwenkwinkel **97** der Verdichtungseinheit **91.** Die Eintauchtiefe **98** Verdichtungselementes im Maß **98** wird mittels einer Schraubverbindung **99** eingestellt.

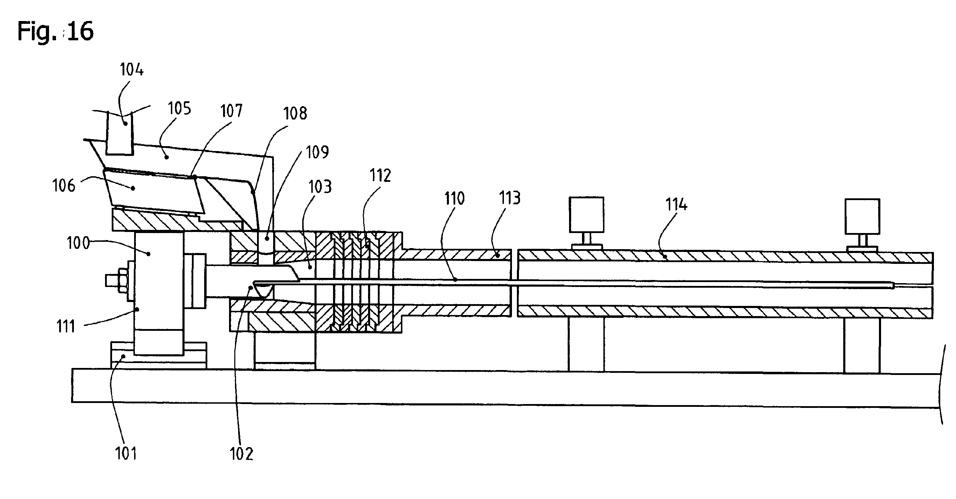

**Fig. 16** zeigt einen Längsschnitt durch eine kontinuierliche Presse. Das Antriebsgetriebe **100** ist längsbeweglich auf dem Schlitten **101** gelagert. Es wird durch hier nicht gezeichnete Hydraulikzylinder bewegt. Durch die Eintauchtiefe des Verdichtungselementes **102** in den Füllund Pressraum **103** wird die Verdichtung des Stranges in bekannter Weise bestimmt.
Das Gemenge aus Kleinteilen gelangt aus dem Zufuhrschacht **104** in die Rüttelrinne **105,** welche durch den Kleinrüttelantrieb **106** in eine orientiert schwingende Bewegung versetzt wird. Entlang der Bahn **107** wird das Gemenge beschleunigt. Die Parabel des vorderen Teiles **108** der Bahn **107** entspricht der Wurfparabel des Gemenges. Dadurch gelangt das Gemenge mit hoher Geschwindigkeit im quasi freien Fall in den Einlaufschacht **109** des Füllund Pressraumes. Der Einlaufschacht **109** ist im Querschnitt größer gehalten als der Gemengestrahl, damit kein Stau entstehen kann. Die Intensität der Schwingungen des Kleinrüttelantriebes **106** wird von einer elektronischen Steuerung bestimmt und an die Abtriebsdrehzahl des Getriebes **100** und der Förderleistung des Verdichtungselementes **102** angepasst. Im Ausführungsbeispiel ist ein hohler Dom **110** an der Rückseite **111** des Antriebsgetriebes **100** befestigt. Durch die Dombohrung wird Wasser und oder Dampf abgesaugt oder Dampf in den Strang injiziert. An den Füll- und Pressraum schließt sich ein Reaktor **112** gemäß EP 0 376 175 an. Nach diesem folgt in bekannter Weise ein starrer Heizkanal **113** und anschließend der bewegliche Heizkanal **114.** Im beweglichen Heizkanal kann ein weiterer ein Reaktor integriert sein, durch den die Aushärtung des Stranges erheblich beschleunigt wird.

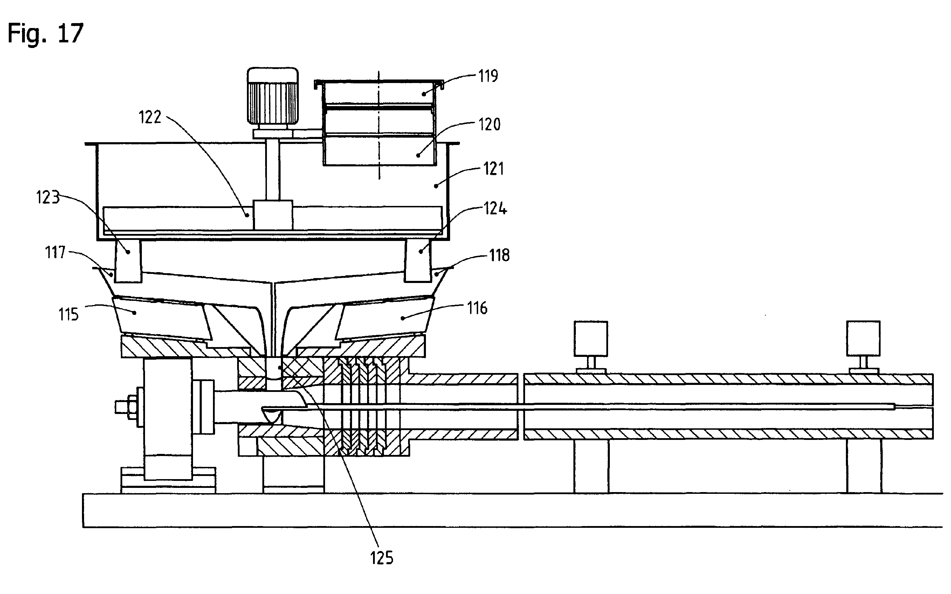

**Fig. 17** zeigt einen Längsschnitt durch eine kontinuierliche Presse. Der Aufbau ist, mit Ausnahme, der Gemengezufuhr mit Fig. 15 identisch. Je dünner der Gemengestrahl ist, auf desto höhere Geschwindigkeit kann er durch die Kleinrüttelantriebe beschleunigt werden. Dadurch kann mehr Gemenge zugeführt werden. Die Erfindung verwendet deshalb im Ausführungsbeispiel 2 Kleinrüttelantriebe **115** und **116,** mit den zugehörigen Rüttelrinnen **117** und **118.** Die Zufuhr des Gemenges erfolgt über einen Trogkettenförderer **119** "mit ewigen Umlauf". Aus dessen Auslaufschacht **120** gelangt es in den Zwischenbehälter **121.** Vom Rührwerk **122** wird es in die Schächte **123** und **124** transportiert. Durch die Kleinrüttelantriebe **115** und **116** wird es beschleunigt und gelang im quasi freien Fall in den Einlaufschacht **125.**

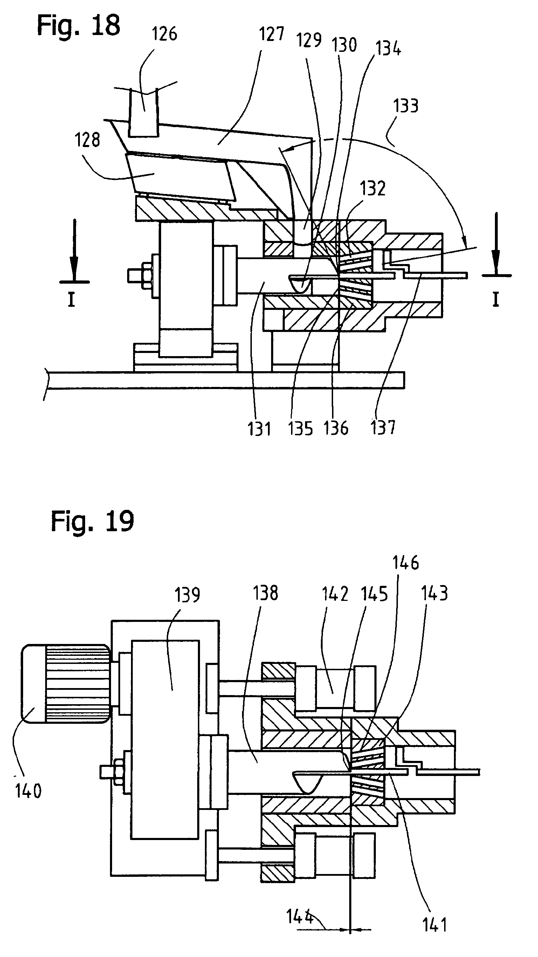

**Fig. 18** zeigt einen Längsschnitt durch eine Presse zur Herstellung von Pellets. Die Kleinteile gelangen aus dem Einfüllschacht **126** über die Wanne **127** des Kleinteileförderers **128** in den Einlaufschacht **129** und aus diesem in den Verdichtungsbereich **130** des Verdichtungselementes **131.** Im Verdichtungsbereich werden sie vorverdichtet und durch die Löcher **132** gedrückt. Durch die Reibung in den Löchern erhalten Sie ihre entgültige Verdichtung. Der Winkel im Maß **133** im 3- dimensionalen Raum beträgt vorzugsweise 60° bis 90°, kann aber bei geeigneten Kleinteilen auch einen stumpfen Winkel aufweisen ( die Darstellung ist zweidimensional und nur schematisch). Durch diesen spitzen bzw. rechten Winkel zwischen der Vorderkante **134** des Verdichtungselementes **131** ergibt sich eine deutlich besseres Produkt und eine verringerte Reibung der Kleinteile gegen die Vorderfläche **135** der Matrize **136.** Durch die vorzügliche Qualität der auf einer erfindungsgemäßen Vorrichtung erzeugten Produkte und ihre durch die Schrägstellung der Löcher **132** erzielten gleichmäßigen Verdichtung brechen die Pellets erst in einer weit größeren Länge ab, als bei vorbekannten Kollerpressen. Es wird deshalb unter Umständen nötig sein, sie auf eine bestimmte, einstellbare Länge mechanisch abzubrechen. Eine einfache Lösung sieht die Erfindung hierzu in Form eines sich drehenden Abbrecharmes **137** vor. Selbstverständlich sind auch andere Formen des Abbrechens möglich und geeignet.

**Fig. 19** zeigt einen Längsschnitt durch eine Presse zur Herstellung von Pellets auf der Linie I-I gemäß Fig. 18. Im Ausführungsbeispiel ist das Verdichtungselement **138** in einem Getriebegehäuse **139** gelagert und wird von einem Motor **140** angetrieben. Bei kleineren Ausführungen der Erfindung kann es allerdings durchaus vorteilhaft sein, das Verdichtungselement direkt auf dem Motor zu lagern, wenn er eine geeignete Drehzahl besitzt. Je nach Größe des Verdichtungselementes haben sich Drehzahlen von etwa 150 min⁻¹ bis zu ca. 1450 min⁻¹ als geeignet erwiesen. Im Ausführungsbeispiel verwendet die Erfindung einen feststehenden Dom **141.** Dieser kann allerdings auch mitdrehend ausgeführt sein. Die beiden Kraftgeber **142,** vorzugsweise Hydraulikzylinder, halten das Verdichtungselement **138** in einem einstellbaren Abstand und/oder drücken es gegen die Matrize **143.** Für Holzkleinteile kann beispielsweise die folgende Einstellung vorteilhaft sein: Abstand im Maß **144** zwischen der Vorderkante **145** des Verdichtungselementes **138** und der Matrize **143** = 0,2 mm; Druckkraft auf die von der Vorderkante überfahrenen Löcher **21** = 800 kp/cm²; Drehzahl = 320 min⁻¹. Wird die Druckkraft z.B. durch einen größeren Holzbrocken der ein Loch **146** verstopft überschritten, wandert das Verdichtungselement **138** für einige Umdrehungen gegen die Pressrichtung zurück. Hat sich das Verdichtungselement **138** durch Abrieb verkürzt, kann es nachgestellt werden. Durch diese federnde und/oder krafteinstellbare Längslagerung des Verdichtungselementes **138** wird der Verschleiß vom ihm und von der Matrize **143** minimiert.

**Fig. 20** zeigt eine Ansicht einer Matrize, gesehen vom Verdichtungselement. Mit der Phantomlinie **147** ist der Durchmesser des Domes dargestellt. Im Bereich, in dem er die Matrize **148** durchdringt, ist er auf den Durchmesser der zentrischen; Matrizenbohrung **149** abgesetzt. Die, die Pressräume bildenden Löcher **150,** sind im Ausführungsbeispiel in 6 Gruppen zu je 10 Löchern angeordnet, was in Fig. 4 deutlicher sichtbar wird. Je mehr die Löcher **150** schief in die Matrize **148** gebohrt werden, desto elliptischer wird die Einlaufkante **151,** und umso länger der Einlaufbereich im Maß **152,** und desto leichter können die Kleinteile durch das Verdichtungselement in die Löcher **150** gedrückt werden. Die in Drehrichtung des Verdichtungselementes liegende Hälfte **153** der Einlaufkante **151** wirkt dabei quasi als Schneidkante. Die Ausfräsung in der Kontur **154** dient als Verdrehsicherung. Da die Erfindung durch die Reibung sehr stark erwärmt wird, sieht die Erfindung die Verwendung von Warmarbeitsstählen vor, die zur Minderung des Verschleißes nitriert werden. Der Verschleiß betrifft die Matrize in zweierlei Arten: Die erstere betrifft die Stirnfläche **155** der Matrize und die Einlaufkanten **26.** Sobald die Einlaufkanten nicht mehr scharfkantig genug sind, d.h., wenn sie sich abgerundet haben und den Kleinteileintrag erschweren, wird die Stirnfläche **155** abgeschliffen und die Matrize neu nitriert. Die zweite Art betrifft den Verschleiß in den Löchern **150.** Sie weiten sich durch die Reibung der durch sie hindurch transportierten, zu Pellets verdichteten Kleinteile auf. Wird der zulässige Pelletdurchmesser überschritten, muss die Matrize erneuert werden. Das Abschleifen der Stirnfläche kann hingegen mehrmals erfolgen. Die geringen Kosten einer erfindungsgemäßen Matrize und die Möglichkeit sie mehrmals nachzuarbeiten bilden einen beträchtlichen Kostenvorteil gegenüber den vorbekannten Kollerpressen.

**Fig. 21** zeigt eine Unteransicht der Matrize gemäß Fig. 3, also die Ansicht gegen die Pressrichtung. Deutlicher als in Fig. 3 ist hier zu erkennen, dass die Löcher **156** in Gruppen **157** unterteilt sind, im Ausführungsbeispiel in 6 Gruppen. Die Löcher jeder Gruppe sind in die gleiche Richtung und mit gleichem Winkel schräggestellt. Bei einigen Kleinteilearten, wie zum Beispiel Futtermittel, die einen geringeren Pressdruck benötigen, kann auf die Schrägstellung der Löcher verzichtet werden. Allerdings hat sich auch hier die Gruppenanordnung der Löcher bewährt. Es ist in jedem Fall vorteilhaft, wenn jeder Punkt der Vorderkante des Verdichtungselementes während einer Umdrehung über zumindest ein Loch fährt und sich die verdichteten Kleinteile nicht ringförmig auf der Matrize aufbauen können.

**Fig. 22** zeigt einen Teilschnitt auf der Linie II - II gemäß Fig. 20 bzw. auf der Linie III - III gemäß Fig. 21. Der Winkel in dem die Löcher **158** schräggestellt sind beträgt im Maß **159** zwischen 60° und 90° bzw. einen vorzugsweise spitzen Winkel zur Vorderkante der Verdichtungsfläche des Verdichtungselementes. Die Löcher jeder Gruppe weisen mit gleichem Winkel in die gleiche Richtung. Dies ermöglicht eine einfache Fertigung auf einer Fräsmaschine oder Koordinatenbohrmaschine und einem Teilapparat. Die Bohrmaschine bohrt die Löcher nach den Koordinaten jeder Lochgruppe, anschließend wird der Teilapparat gedreht. Durch die Gruppenanordnung wird verhindert, dass sich die einzelnen Löcher gegenseitig durchdringen. Die Löcher werden erfindungsgemäß je nach Art der Kleinteile zylindrisch, sich in Pressrichtung konisch erweiternd oder bevorzugt und gezeichnet, stufenförmig ausgeführt. Bei einer stufenförmigen Ausbildung kann die Verdichtung durch die Länge **160** des kleineren, verdichtungselementseitigen Lochteiles **161** zumindest grob vorbestimmt werden. Ist eine Feinbestimmung der Verdichtung notwendig, kann sie durch die Kraft der Kraftgeber geregelt werden, die, wie in Fig. 2 gezeichnet, das Verdichtungselement in Richtung der Matrize drücken. Das die Matrize durch die Reibung der verdichteten Kleinteile erheblich erwärmt wird, schlägt die Erfindung die Verwendung von geeigneten Werkstoffen, wie z.B. Warmarbeitsstahl vor. Um die Standzeit zu erhöhen hat sich eine Nitrierbehandlung besonders bewährt. Durch Verschleiß wird die scharfe Kante **162** abgerundet, wodurch die Verdichtungskraft erhöht. Die Matrize kann an der Verdichtungsfläche **163** mehrmals oder vielmals nahgeschliffen und erneut nitriert werden.

**Fig. 23** zeigt die Seitenansicht eines Verdichtungselementes. In Weiterentwicklung von DE 101 01 386 ist das Verdichtungselement **164** mit zwei Stufen **165** und **166** versehen. Bei der Verdichtung drückt das zu verdichtende Gemenge aus Kleinteilen nicht oder kaum auf die Bereiche der in dieser Ansicht nicht dargestellten H20- Austrittslöcher. Diese sind durch die Bohrungen **167** mit der Drehdurchführung **168** verbunden. Mit diesem System wird bei der Erzeugung von Pellets Dampf, heißes Wasser oder unter Druck stehendes Heißwasser in das teilverdichtete Gemenge aus Kleinteilen eingebracht um es quasi zu plastifizieren. Durch dieses Verfahren wird die benötigte Antriebsenergie vorteilhaft herabgesetzt. Es gelangt insbesondere dann zur Anwendung, wenn die Holzkleinteile zu trocken sind. Die Feuchte des Gemenges kann auf bis zu etwa 20% atro heraufgesetzt werden. Da das H₂O im kalten Gemenge kondensiert, dient es vorteilhafter Weise zugleich zur Kühlung des Verdichtungselementes und der Matrize.
Bei der Herstellung von Strängen, z.B. für Palettenklötze, kann das durch das System geführte H₂O vorteilhaft zur Strangerwärmung auf Abbindetemperatur des Bindemittels oder auf eine Temperatur die über der Verdampfungstemperatur des H₂O bei dem auf den Strang wirkenden Druck liegt, verwendet werden. Bei den bekannten Reaktoren nach EP 0 376 175 wird der Strang von außen her erwärmt. Da der Dampf zunächst im kalten Strang kondensiert, wird bei diesem Verfahren eine Wasserschicht vor dem eindringenden Dampf hergeschoben. Bei der Erfindung wird der Dampf hingegen dem teilverdichteten Strang im Querschnitt zugeführt. Es wird weniger Dampf bzw. Heißwasser benötigt, da der Dampf nach außen austreten kann und kondensiertes Wasser bzw. Naßdampf mitreißt. Im Ausführungsbeispiel ist das Verdichtungselement mit dem Zapfen **169** in der Hohlwelle des Antriebsgetriebes gelagert. Die Drehmomentübertragung erfolgt durch die Passfeder **170.**

**Fig. 24** zeigt eine Ansicht in Richtung des Pfeils X gemäß Fig. 6. Im Ausführungsbeispiel ist das Verdichtungselement **171** mit einer Bohrung **172** versehen, durch die ein Dorn geführt wird. Es sind zwei Stufen **173** und **174** ausgeführt. Die Zahl der Stufen hängt vom Durchmesser des Verdichtungselementes und von den Kleinteilen ab. Es können ein bis fünf Stufen vorteilhaft sein. Die Stufenhöhe in Pressrichtung kann ca. 0,5 bis etwa 4 mm betragen. Bei Bedarf kann sie auch höher sein. Die erste Stufe **174** liegt in einem Abstand im Maß **175** von etwa 1/10 bis 1/3 Umdrehung von der Vorderkante **176** des Verdichtungselementes **171.** Der Abstand der letzten Stufe ist derart, dass kein oder nur geringfügig Dampf oder Wasser in den Füllraum der Presse austritt. Unmittelbar vor jeder Stufe enden die Dampfaustrittsbohrungen **177.** Es können bei jeder Stufe ein bis etwa 5 Bohrungen ausgeführt werden. Ihr Durchmesser kann zwischen etwa 1 bis ca. 5 mm betragen. Als vorteilhaft hat es sich erwiesen, lediglich eine Bohrung auszuführen, die in einem Dampfaustrittsschlitz endet. Seine Breite kann etwa 0,1 bis ca. 0,4 betragen. Der Schlitz liegt im Querschnitt des Stranges in dem Bereich, in dem die Hauptmenge an H₂O in den Strang indiziert werden soll.
Durch das austretende H₂O ergeben sich zwei weitere Vorteile: Durch die Reibung der sich verdichtenden Kleinteile werden die Matrize und das Verdichtungselement erheblich erwärmt. Das H₂O wirkt auch in Dampfform als Kühlung und kann die Temperaturen in einem für die Werkstoffe zulässigen Bereich halten. Zwischen der Förderfläche des Verdichtungselementes und der Lochwände bildet sich eine Dampfschicht die die Reibung sehr vorteilhaft reduziert und die benötigte Antriebsenergie verringert.

**Fig. 25** zeigt ein Verdichtungselement mit einem Dom zur Dampfinjektion. Durch das Verdichtungselement **178** ragt der Dom **179,** dessen Zapfen **180** als Führung und Lagerung in der Matrize dient. Das Verdichtungselement ist mit einer Hinterschneidung **181** ausgebildet, um den Gemengeeintrag zu erhöhen. Das H₂O gelangt aus dem Dorn **179** über die Löcher **182, 183** in das teilverdichtete Gemenge aus Kleinteilen. Um zu verhindern, dass die Löcher **182** und **183** durch Kleinteile verstopft werden, sind sie schräggestellt. Die Zahl der Löcher ist von der Länge bzw. dem Durchmesser der Verdichtungsspirale abhängig. Es können ein bis etwa 5 Löcher in den Dom **179** eingebracht werden. Der Dom kann sowohl stehend als auch mitdrehend ausgeführt werden.

**Fig. 26** Zeigt einen Längsschnitt durch eine Strangpresse in Weiterentwicklung von DE 101 01 386. Anstelle eines Reaktors erfolgt der H₂O- Eintrag durch das mit einer Stufe **184** versehene Verdichtungselement **185.** Die Strangpresse **186** dient im Ausführungsbeispiel der Erzeugung von runden Palettenklötzen. An sie schließt sich ein Heizkanal in einer beliebigen Bauweise an. Dargestellt ist lediglich der starre Vorheizkanal **187.** Das H₂O gelangt über die Drehdurchführung **188** und das Verdichtungselement **60** in den nicht dargestellten Strang.
Der H₂O- Eintrag in den Strang kann in vorteilhafter Weise auch kombiniert durch das Verdichtungselement und einem Rektor gemäß EP 0 376 175 und seinen Weiterentwicklungen erfolgen.

## Patentansprüche

1. Verfahren zum kontinuierlichen Strang- und Strangrohrpressen eines Gemenge aus Kleinteilen, bei welchem das zu verpressende Gemenge durch einen schraubenartigen gewundenen Förderweg gefördert wird, der durch ein rotierend angetriebenes Kulissenelement gebildet ist, **dadurch gekennzeichnet, dass** sich die Kulisse nicht länger als über einen Winkel von bis zu 360° oder einer Umdrehung, gegebenenfalls zuzüglich einer Hinterschneidung, ausgebildet ist.

2. Verfahren nach Anspruch 1 **dadurch gekennzeichnet, dass** die Gemengezufuhr durch eine oder zwei, orientiert schwingende Rüttelrinnen in den Einlaufschacht in den Einlaufschacht im weitgehend freien Fall in einem Gemengestrahl erfolgt.

3. Verfahren nach einem der Ansprüche 1 bis 2 **dadurch gekennzeichnet, dass** sich die Verdichtung des Stranges in gewünschter Höhe selbstreguliert, derart, dass eine regelbare, einstellbare hydraulische Kraft das Verdichtungselement soweit in den Pressraum drückt bis diese mit der Gegenkraft, die sich aus der Reibung und der Verdichtungskraft zusammensetzt im Gleichgewicht ist, wobei die gewünschte Dichte des Stranges durch die Einstellung der Größe der hydraulischen Kraft bestimmt wird.

4. Verfahren nah einem der Ansprüche 1 bis 3 **dadurch gekennzeichnet, dass** das Verdichtungselement durch Wasser und/oder Wasserdampf gekühlt und dass das Wasser und/oder der Wasserdampf in die Kemzone des Stranges eingebracht wird.

5. Verfahren nach einem der Ansprüche 1 bis 9 **dadurch gekennzeichnet, dass** die Verdichtung durch eine einstellbare hydraulische Kraft gegen das mitdrehen des Dornes bestimmt wird.

6. Verfahren nach einem der Ansprüche 1 bis 9 **dadurch gekennzeichnet, dass** das vorverdichtete Gemenge durch die Löcher einer vor dem Verdichtungselement stehenden Wand bzw. Matrize gedrückt wird und dabei seine endgültige Verdichtung erhält, wobei des Verdichtungselement mit einer einstellbaren und regelbaren Kraft in Pressrichtung gedrückt wird und/oder in einer einstellbaren und regelbaren Stellung in Pressrichtung hinter der Wand steht.

7. Vorrichtung zur Durchführung des Verfahrens nach den Ansprüchen 1 bis 7 **dadurch gekennzeichnet, dass** zum Verdichten des Stranges eine Kulisse in einer Länge bis zu einer Umdrehung oder 360° mit oder ohne Hinterschneidung vorgesehen ist.

8. Vorrichtung nach Anspruch 7 **dadurch gekennzeichnet, dass** die Kulisse eine in Pressrichtung in etwa parabel- oder bogenförmig abnehmende Steigung aufweist, deren Steigung am Kulissengrund cá 20° bis etwa 45° beträgt und sich zur Kulissenspitze hin auf cá. 2° bis 15° verringert oder eine gleichmäßige Steigung von cä 8° bis 35° aufweist.

9. Vorrichtung nach deinem der Ansprüche 1 bis 8 **dadurch gekennzeichnet, dass** das Verdichtungselement durch Hydraulikzylinder mit einer vorwählbaren Kraft soweit in den Pressraum gedrückt wird, bis mit der Gegenkraft durch des Verdichten ein Gleichgewicht besteht, wobei durch die Größe der vorwählbaren Kraft die Verdickung bestimmt wird und diese dadurch selbstregelnd eingehalten wird, dass eine höhere Gegenkraft das Verdichtungselement soweit aus dem Pressraum wandern lässt, bis wieder ein Kräftegleichgewicht herrscht und eine geringere Gegenkraft des Verdichtungselement soweit in den Pressraum wandern lässt bis sich ebenfalls ein Gleichgewicht der Kräfte einstellt.

10. Vorrichtung nach den Ansprüchen 1 bis 9 **dadurch gekennzeichnet, dass** das Gemenge durch eine Rüttelrinne in den Einlaufschacht des Füll- und Pressraumes gelangt und die Rüttelrinne durch eine, in der Intensität und Frequenz einstellbaren Kleinteileförderer in eine Förderbewegung versetzt wird.

11. Vorrichtung nach einem der Ansprüche 14 bis 16, **dadurch gekennzeichnet, dass** die Löcher in der Matrize in einem Winkel von ca. 60° bis etwa 90° zur Austrittsfläche der schraubenförmig gewundenen Förderfläche des Verdichtungselementes stehen.

12. Vorrichtung nach einem der Ansprüche 14 bis 16, **dadurch gekennzeichnet, dass** die Löcher in der Matrize in einem Winkel von ca. 60° bis etwa 90° zur Austrittsfläche der schraubenförmig gewundenen Förderfläche des Verdichtungselementes stehen und die Löcher gruppenförmig um die Drehachse des Verdichtungselementes angeordnet sind und die Löcher jeder Gruppe in die gleiche Richtung weisen.

13. Vorrichtung nach den vorgenannten Ansprüchen **dadurch gekennzeichnet, dass** das Verdichtungselement durch Kraftgeber, vorzugsweise Hydraulikzylinder, in einer regelbaren Lage und/oder mit einer regelbaren Kraft in einer bestimmbaren Stellung zur Matrize gehalten werden, wobei das Verdichtungselement bei überschreiten der Kraft gegen die Förderrichtung ausweichen kann.

14. Vorrichtung nach den vorgenannten Ansprüchen **dadurch gekennzeichnet, dass,** wenn H₂O durch das Verdichtungselement in das teilverdichtete Gemenge transportiert wird, die schraubenförmige Förderfläche des Verdichtungselementes mit zwischen einer und fünf Stufen ausgebildet ist, welche die Förderfläche gegen die Förderrichtung in jeder Stufe um ca. 0,5 bis etwa 4 mm, bei Bedarf noch weiter, zurücksetzen.
